# EUROPÄISCHE PATENTSCHRIFT

(11) **EP 3 088 153 B1**
(45) Veröffentlichungstag und Bekanntmachung des Hinweises auf die Patenterteilung: **06.06.2018**
(21) Anmeldenummer: 15165259.1
(22) Anmeldetag: 27.04.2015
(51) Int. Cl.: B29C 44/34, B29C 33/04

(54) **FORMWERKZEUG**
MOULDING TOOL
OUTIL DE FORMAGE

(43) Veröffentlichungstag der Anmeldung: 02.11.2016
(73) Patentinhaber: Overath GmbH, 53797 Lohmar (DE)
(72) Erfinder: Lang, Eberhard, 74080 Heilbronn (DE); Overath, Udo, 53797 Lohmar (DE)
(74) Vertreter: Wagner Albiger & Partner Patentanwälte mbB

(56) Entgegenhaltungen:
- DE-A1- 2 119 358
- DE-A1- 2 911 120
- DE-U1-202007 006 162
- GB-A- 1 563 324
- US-A- 3 837 769
- US-A- 4 192 638

## Beschreibung

Die Erfindung betrifft ein Formwerkzeug zur Herstellung von Formteilen aus expandierbaren Kunststoffperlen, wobei das Formwerkzeug eine dem Formteil zugewandte Innenwandung sowie eine dem Formteil abgewandte Außenwandung aufweist, zwischen denen ein Hohlraum für die Durchleitung eines Heiz-/Kühlmediums ausgebildet ist und die Innen- und Außenwandung bereichsweise mittels Abstandshaltern miteinander verbunden sind und innerhalb der Abstandshalter Durchgangsbohrungen für die Durchleitung von Dampf aufweist, die die Außen- und Innenwandung durchsetzen und gegenüber dem Hohlraum abgedichtet sind.

Formwerkzeuge der eingangs benannten Art zur Herstellung von Formteilen aus expandierbaren Kunststoffperlen, z.B. expandierbarem Polypropylen (EPP) oder expandierbarem Polystyrol (EPS) sind vielfältig bekannt.

Konventionell besteht ein derartiges Formwerkzeug aus mindestens zwei Formwerkzeugteilen, die gemeinsam einen Formhohlraum bilden, in dem der Formkörper aus eingefüllten Kunststoffperlen durch Wärmezufuhr und partielle Verschweißung der benachbarten Kunststoffperlen entsteht. Dabei wird üblicherweise in den geschlossenen Formhohlraum unter Kühlung der Formteilhälften einen vorbestimmte Menge an Kunststoffperlen eingebracht und anschließend werden die Formwerkzeugteile sowie die im Formhohlraum aufgenommenen Kunststoffperlen durch Einleiten großer Mengen von Wasserdampf auf eine geeignete Temperatur von beispielsweise etwa 140 bis 145°C erhitzt. Anschließend wird das zuvor aufwendig erhitzte Werkzeug durch Aufsprühen großer Mengen von Kühlwasser von der Rückseite des Formhohlraumes her wieder auf eine Temperatur von etwa 60 bis 70°C abgekühlt, bevor nach Öffnen der Formwerkzeugteile das Formteil entnommen werden kann. Bei diesem an sich bewährten Verfahren ist das Formwerkzeug sehr massiv aus üblicherweise metallischen Werkstoffen hergestellt und weist an seiner dem Formhohlraum abgewandten Außenseite eine großzügig bemessene Dampfkammer auf, um eine zügige und ausreichend Erhitzung sowohl des Formwerkzeuges als auch der innerhalb des Formhohlraumes befindlichen Kunststoffperlen zu gewährleisten, durch die der Dampf vollständig hindurchdringen muss, um eine homogene Verschmelzung zu gewährleisten. Dementsprechend sind nicht nur die eingesetzten Formwerkzeuge aufwendig, sondern es werden auch große Mengen an Dampf sowie Kühlwasser benötigt, die zu einer äußerst ungünstigen Energiebilanz der bekannten Vorrichtungen führen und darüber hinaus durch die anfallenden hohen Wassermengen besondere Anforderungen an den Aufstellungsort derartiger Formmaschinen stellen.

Es ist daher bereits verschiedentlich versucht worden, derartige Formwerkzeuge zu optimieren.

Aus der DE 29 36 273 A1 ist eine zweiteilige Metallform zur Herstellung von Formkörpern aus vorgeschäumtem Kunststoffgranulat bekannt, deren Metallwandungen doppelschalig ausgebildet sind und mittels Abstandshaltern voneinander beabstandet sind, wobei innerhalb der Doppelschalen Hohlräume ausgebildet sind, die bei einem Formwerkzeugteil der Durchleitung eines Heiz-/Kühlmediums dienen können und bei dem gegenüberliegenden Formwerkzeugteil der Durchleitung von Dampf in den Formhohlraum dienen. Nachteilig bei diesem bekannten Formwerkzeug ist es jedoch, dass die jeweiligen Formwerkzeugteile lediglich mit einem Medium beaufschlagt werden können, d.h. im Bereich eines Formwerkzeugteiles erfolgt die Dampfeinleitung, während über das andere Formwerkzeugteil die Temperierung mittels des Heiz-/Kühlmediums erfolgt, so dass die mit derartigen Formwerkzeugen herstellbaren Teile lediglich dünnwandig ausgebildet werden können, da ansonsten weder eine ausreichende Temperierung noch eine ausreichende Durchdringung des Formteils mit Dampf gewährleistet ist. Das bekannte Formwerkzeug eignet sich damit nur für einen äußerst begrenzten Anwendungsbereich und ist nicht in der Lage, das eingangs erwähnte nachteilige Standardformwerkzeug für die Herstellung von beliebigen Formkörpern zu ersetzen.

Die US 3 837 769 offenbart ein Formwerkzeug gemäß dem Oberbegriff des Anspruches 1, welches als Guss- oder Frästeil aus Metall und Kunststoff hergestellt ist. Der Gestaltung des Werkzeuges und der Anordnung der Durchgangsbohrungen für Dampf sind jedoch enge konstruktive Grenzen gesetzt und die Oberfläche ist nicht für Kondensat durchlässig, was u.a. Nachteile bei der erzielbaren Oberflächenqualität mit sich bringt.

Aufgabe der Erfindung ist es daher, die Nachteile des Standes der Technik zu umgehen und ein Formwerkzeug vorzuschlagen, welches mit bedeutend verringertem Energieaufwand bei gleichzeitig merklich erhöhten Taktfrequenzen eine rationelle Herstellung von Formkörpern aus expandierbaren Kunststoffperlen mit hoher Qualität ermöglicht.

Zur Lösung der gestellten Aufgabe wird erfindungsgemäß die Ausgestaltung eines Formwerkzeuges mit den Merkmalen des Patentanspruchs 1 vorgeschlagen.

Vorteilhafte Ausgestaltungen und Weiterbildungen der Erfindung sind Gegenstand der abhängigen Ansprüche.

Die Erfindung schlägt vor, dass das Formwerkzeug integral einstückig aus einem Sintermetall hergestellt ist und die Innenwandung mit einer Vielzahl von Kapillarkanälen ausgebildet ist, die sich von einer dem Formteil zugewandten Innenoberfläche bis in den Hohlraum erstrecken und über welche Kondensat von der dem Formteil zugewandten Innenoberfläche in den Hohlraum ableitbar ist.

Auf diese Weise ist es möglich, sowohl das Formwerkzeug mit Heiz- und Kühlmedium zu durchströmen, nämlich im Bereich des Hohlraumes zwischen der Innen- und Außenwandung, um dieses zu temperieren und zugleich auch ohne die Gefahr einer Vermischung mit dem Heiz- und Kühlmedium Dampf zur Temperierung des Formwerkzeuges als auch des innerhalb des Formwerkzeuges auszubildenden Formteiles durch die Durchgangsbohrungen desselben zu führen. Damit ist es möglich, ein Formwerkzeug herzustellen, welches mit deutlich verringerten Abmessungen gegenüber dem Stand der Technik herstellbar ist und darüber hinaus können sowohl das Heiz- und Kühlmedium als auch der Dampf durch entsprechende Anordnung der Durchgangsbohrungen nahezu beliebig an alle Positionen des Formwerkzeuges geführt werden und insbesondere auch an kritischen Stellen des zu erstellenden Formteiles, etwa Materialdick- und -dünnstellen und dergleichen geeignet vorgehalten und aufgebracht werden.

Die Kapillarkanäle können einen Durchmesser von 0,1 bis 1,0 mm, beispielsweise 0,3 mm aufweisen. Mit einem derartigen Formwerkzeug kann der Zwickelbildung durch anfallendes Kondensat während der Formteilherstellung wirksam entgegengewirkt werden.

Bei der Bedampfung der in den Formhohlraum eingefüllten expandierbaren Kunststoffperlen kommt es unweigerlich zu einem Kondensatausfall an der dem späteren Formteil zugewandten Oberfläche der Innenwandung. Dieses Kondensat wird erfindungsgemäß in die Kapillarkanäle infolge der Kapillarwirkung eingezogen. Sobald sich das Formteil aufgrund der Bedampfung ausbildet, dehnt sich dieses gegen die Oberfläche der Innenwandung aus und verdrängt das Kondensat weiter in die Kapillarkanäle, von wo aus es in den Hohlraum übertritt und in das nachfolgend durch den Hohlraum geleitete Heiz- und Kühlmedium übergeht. Andererseits kann Heiz- und Kühlmedium bei Durchlaufen des Hohlraumes nicht über die Kapillarkanäle in den Formhohlraum übertreten, da das expandierte Formteil im Formhohlraum die Kapillarkanäle abdichtend verschließt.

Ein derartiges erfindungsgemäßes Formwerkzeug wird integral aus Sintermetall hergestellt, so dass die geringen Wandstärken und spezifischen Geometrien wie vorangehend erläutert auf einfache Weise hergestellt werden können. Insbesondere kann das selektive Lasersintern (SLS) angewandt werden, um derartige erfindungsgemäße Formwerkzeuge mit innerhalb der säulenartig ausgebildeten Abstandshalter verlaufenden Durchgangsbohrungen in einem Arbeitsgang integral aus geeigneten Werkstoffen herzustellen. Hierfür kommen insbesondere geeignete Metallpulver zum Einsatz.
Nach einem Vorschlag der Erfindung sind die Abstandshalter in regelmäßigen Abständen nach Art eines Rasters zueinander angeordnet, so dass sich die Möglichkeit eröffnet, eine entsprechend hohe Anzahl an Durchgangsbohrungen für die Durchleitung von Dampf im Formwerkzeug auszubilden.
Darüber hinaus können die Abstandshalter insbesondere bei Anordnung in regelmäßigen Abständen nach Art eines Rasters auch als Strömungsteiler für das durch den Hohlraum durchleitbare Heiz-/Kühlmedium wirken, so dass dieses gut und gleichmäßig durchmischt wird und sich eine homogene Temperaturverteilung einstellt und ein guter Wärmeübergang sichergestellt wird.
Die Innen- und Außenwandung können im Wesentlichen parallel zueinander und mit konstantem Abstand voneinander angeordnet werden, wobei die Abstandshalter sich senkrecht zu der Innen- und Außenwandung erstrecken können. Dadurch wird das erfindungsgemäße Formwerkzeug sehr kompakt gehalten.
Weiterhin wird vorgeschlagen, dass zwischen benachbarten Abstandshaltern und den dem Hohlraum zugewandten Oberflächen der Innen- und Außenwandung jeweils kreisförmige Durchströmöffnungen für das Heiz- und Kühlmedium ausgebildet sind, was insbesondere ermöglicht, die Abstandshalter etwa säulenartig auszubilden. Sie weisen dann beispielsweise runden Querschnitt auf.

Weiterhin kann vorgesehen sein, dass sich die Durchgangsbohrungen innerhalb der Abstandshalter ausgehend von der Außen- zur Innenwandung konisch verjüngen, wodurch eine höhere Standfestigkeit durch einen Selbstreinigungseffekt auf der Seite des Formteilhohlraumes erzielbar ist. Überdies wird auch die Oberflächenqualität des herzustellenden Formteiles durch diese Maßnahme extrem verbessert.

Die Durchgangsbohrungen können sich beispielsweise von einem Außendurchmesser von etwa 1,5 bis 2 mm auf 0,3 bis 0,5 mm im Bereich des Austritts zum Formhohlraum konisch verjüngen.

Die Innen- und Außenwandung des erfindungsgemäßen Formwerkzeuges können sehr dünnwandig ausgeführt sein, beispielsweise Wandstärken von 0,3 bis 3 mm aufweisen.

Der Hohlraum zwischen der Außen- und Innenwandung kann ebenfalls sehr niedrig ausgeführt werden, beispielsweise mit einer lichten Höhe von 3 bis 6 mm.

Die nach einem Vorschlag der Erfindung säulenartig ausgebildeten Abstandshalter können einen Durchmesser von etwa 4 bis 6 mm aufweisen.

Darüber hinaus ist es auch möglich, auf der dem Hohlraum abgewandten Außenseite der Außenwandung eine mit den Durchgangsbohrungen kommunizierende Dampfkammer anzuformen, aus der der Dampf unmittelbar in die Durchgangsbohrungen und von dort in den Formteilhohlraum übertreten kann.

Diese Dampfkammer kann ebenfalls sehr kompakt gehalten werden und beispielsweise eine lichte Höhe von 2 bis 4 mm aufweisen.

Weitere Ausgestaltungen und Einzelheiten der Erfindung werden nachfolgend anhand der ein Ausführungsbeispiel darstellenden Zeichnung näher erläutert. Es zeigen:
- Figur 1: einen stufenweisen Schnitt durch ein Formwerkzeug gemäß der Erfindung;
- Figur 2: den Schnitt durch das Formwerkzeug gemäß Figur 1 aus anderem Blickwinkel in vergrößerter Darstellung.

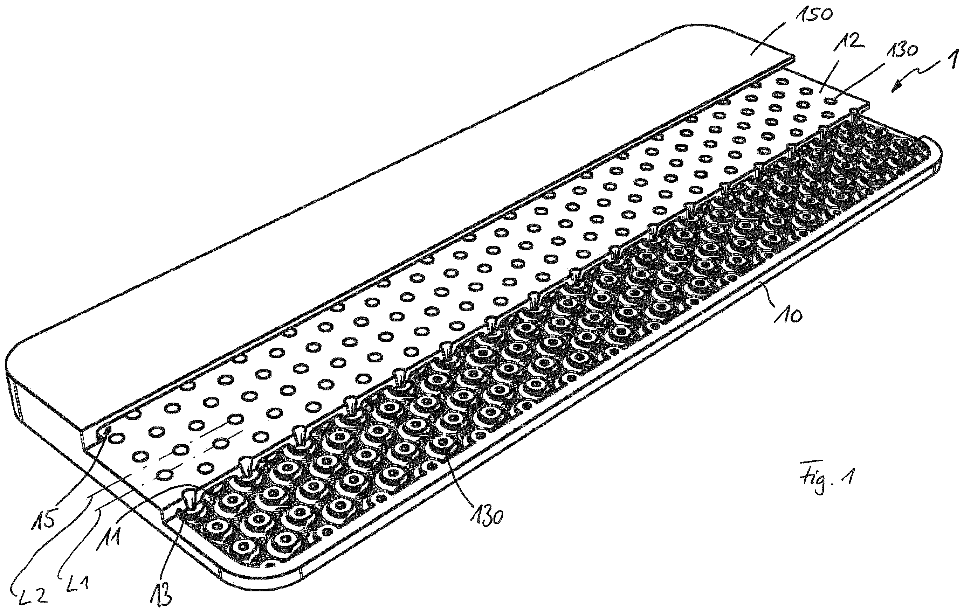

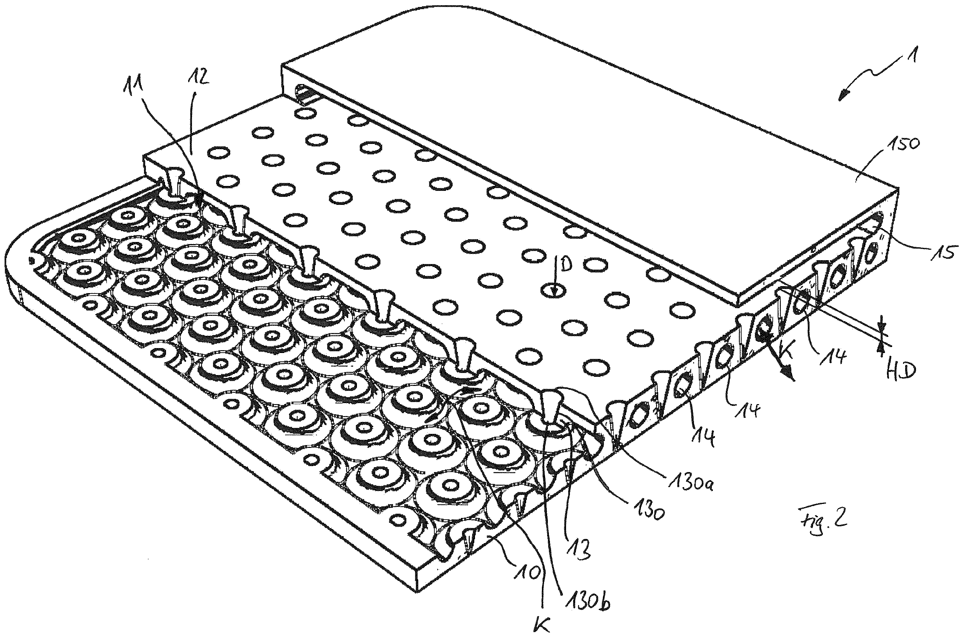

Aus den Figuren 1 und 2 ist ein Ausführungsbeispiel eines erfindungsgemäßen Formwerkzeuges, genauer gesagt eines Formwerkzeugteiles desselben ersichtlich, welches im Zusammenwirken mit einem weiteren, hier nicht dargestellten, aber im Prinzip ähnlich aufgebauten weiteren Formwerkzeugteil einen Formhohlraum begrenzt, in welchem ein Formteil aus expandierbaren Kunststoffperlen in an sich bekannter Weise hergestellt werden kann.

Das Formwerkzeugteil, nachfolgend einfach auch als Formwerkzeug bezeichnet, ist global mit Bezugszeichen 1 gekennzeichnet und umfasst eine dem Formteil und dem Formhohlraum zugewandte Innenwandung 10 sowie eine dem Formteil abgewandte Außenwandung 12, die mittels säulenförmig ausgebildeten Abstandshaltern 13 voneinander beabstandet positioniert sind, so dass zwischen den Abstandhaltern 13 ein durchgehender Hohlraum 11 ausgebildet ist.

Die Abstandhalter 13 sind in regelmäßiger und insbesondere rasterförmiger Anordnung vorgesehen, wobei sie auf in Figur 1 beispielhaft mit L1 und L2 bezeichneten Linien angeordnet sind, wobei die einzelnen Abstandshalter einer Linie L1 so angeordnet sind, dass auf der benachbarten Linie L2 die Abstandshalter jeweils um den halben Abstand versetzt angeordnet sind. Sämtliche Linien L1, L2 verlaufen parallel.

Durch die säulenförmige Ausgestaltung der Abstandhalter, die beispielsweise einen Durchmesser von 4 bis 6 mm aufweisen, wird zwischen den dem Hohlraum 11 zugewandten Oberflächen der Innenwandung 10 und Außenwandung 12 sowie den Abstandshaltern 13 jeweils eine kreisförmige Durchströmöffnung 14 belassen. Es ist von daher möglich, innerhalb des Hohlraumes 11 ein in Figur 2 mit Pfeil K angedeutetes Heiz- und Kühlmedium zirkulieren zu lassen, um die Oberflächen des Formwerkzeuges während, vor und nach der Formteilherstellung auf die gewünschten Temperaturen zu beheizen oder abzukühlen. Die regelmäßig in einem Raster angeordneten Abstandshalter 13 werden dabei von dem Heiz- und Kühlmedium umströmt und dienen als Strömungsteiler, so dass eine homogene Verteilung und gute Umwälzung des Heiz- und Kühlmediums K erreicht wird. Die Anschlüsse für das Heiz-/Kühlmedium sind nicht dargestellt, können aber an geeigneter Stelle vorgesehen werden.

Durch diese Ausgestaltung ermöglicht das dargestellte Formwerkzeug eine konturnahe Kühlung, wenn nach Abschluss des Schäumvorganges ein Kühlmedium, wie Wasser, durch den Hohlraum geleitet wird. Auf diese Weise kann gegenüber bekannten auf Sprühkühlung basierenden Verfahren eine erhebliche Reduktion des Kühlwasserverbrauchs erreicht werden und es kommt zu keinem nennenswerten Kühlmittelaustritt mehr aus einem das erfindungsgemäße Formwerkzeug aufweisenden Formteilautomaten, so dass eine nahezu trockene Arbeitsweise erreicht wird. Auf diese Weise ist eine Reduktion des Kühlwasserverbrauchs von bis zu 75% realisierbar.

Darüber hinaus ist innerhalb jedes säulenförmigen Abstandhalters 13 eine Durchgangsbohrung 130 ausgebildet, die die Innen- und Außenwandung 10, 12 des Formwerkzeuges 1 durchsetzen, wobei sich diese Durchgangsbohrungen, ausgehend von der Außenoberfläche 12 und der dortigen Eintrittsöffnung 130a, hin zur Innenoberfläche und der dortigen Austrittsöffnung 130b konisch verjüngen, beispielsweise von einem Anfangsdurchmesser von etwa 1,5 bis 2 mm auf 0,3 bis 0,5 mm.

Damit ist es möglich, durch jeden einzelnen Abstandshalter 13 im Bereich der darin ausgebildeten Durchgangsbohrung 130 Dampf D von der Außenwandung 12 her in Richtung auf die Innenwandung 10 und von dort in den Formhohlraum zu leiten, so dass die in an sich bekannter Weise im Formhohlraum positionierten expandierbaren Kunststoffperlen mittels heißem Dampf bedampft und zum Formteil verschmolzen werden können.

Die zur Dampfbeaufschlagung vorgesehene Dampfkammer 15 ist mittels einer auf die Außenwandung 12 in einem gewissen Abstand aufgebrachte Wandung 150 realisiert, wobei die lichte Höhe HD der Dampfkammer beispielsweise 2 bis 4 mm aufweist. Auch hier sind der Einfachheit halber Anschlüsse und Zuleitungen zur Dampfkammer 15 nicht dargestellt.

Durch die Ausbildung der Durchgangsbohrungen 130 innerhalb der Abstandshalter 13 wird gewährleistet, dass das im Hohlraum 11 zirkulierende Kühlmittel von den durch die Durchgangsbohrungen 130 geleiteten Dampf D vollständig getrennt ist und es zu keinerlei Durchmischung kommt, wodurch auch der Dampfverbrauch gegenüber bekannten Verfahren extrem verringert werden kann. Eine Dampfreduzierung im Vergleich zu konventionellen Verfahren in Höhe von 65% erscheint ohne weiteres vorstellbar.

Durch die bereits erläuterte konische Verjüngung der Durchgangsbohrungen 130 für den Dampfdurchtritt wird überdies die Oberfläche der erhaltenen Formteile stark verbessert und die Standzeit eines derartigen Formwerkzeuges 1 erhöht, da es zu einem Selbstreinigungseffekt kommt und der Eintritt von Formteilmasse in die Dampfdurchgangsbohrungen 130 wirksam verhindert wird. Überdies gestattet die rastermäßige Anordnung der Durchgangsbohrungen 130 innerhalb der regelmäßig angeordneten Abstandshalter sowie die vollflächige Durchströmung des Formwerkzeuges 1 mit Kühlmedium eine effektive und von der Geometrie des zu erstellenden Formteiles weitgehend unabhängige Temperierung und Bedampfung, wobei selbstverständlich entsprechend den Erfordernissen in bestimmten Bereichen des Formwerkzeuges auch eine höhere oder niedrigere Anzahl an Abstandshaltern 13 und darin ausgebildeten Durchgangsbohrungen 130 für den Dampfdurchtritt D ausgebildet sein können.

Das in den Zeichnungen dargestellte Formwerkzeug 1 kann insbesondere im so genannten Lasersinterverfahren aus einem geeigneten metallischen Werkstoff integral einstückig in einem Arbeitsgang trotz seiner komplexen Geometrie hergestellt werden und ermöglicht die Reduktion der Formwerkzeugmasse durch eine erhebliche Reduzierung der erforderlichen Wandstärken. So können die Innen- und Außenwandung 10, 12 in Wandstärken von beispielsweise 0,3 bis 3 mm hergestellt werden, wobei die große Anzahl an vorgesehenen Abstandshaltern 130 eine gleichwohl hohe Stabilität der den Hohlraum begrenzenden Innen- und Außenwandung 10, 12 gewährleistet. Das Werkzeuggewicht eines solchen Formwerkzeuges kann damit ebenfalls gegenüber dem konventionellen Verfahren extrem reduziert werden, hierbei sind Gewichtsreduzierungen bis zu 70% vorstellbar.

Durch eine solche Gewichtsreduzierung kann auch die gesamte, das Formwerkzeug aufnehmende Maschine deutlich kleiner ausgeführt werden, da auch die zu bewegenden Massen extrem reduziert werden.

Schließlich wird auch die erforderliche Prozesszeit zum Formen eines Formteiles durch diese besonders kompakte Ausgestaltung eines Formwerkzeuges bedeutend reduziert, da sich die Aufheiz- und Abkühlzeiten entsprechend der erzielbaren Massereduktion im Formwerkzeug sowie der erzielbaren effektiven Bedampfung und Kühlung extrem reduzieren. So sind bereits Prozesszeitreduktionen gegenüber den konventionellen Herstellungsweisen von über 40% realisiert worden.

Um eventuell anfallendes Kondensat im Formhohlraum, insbesondere an der Oberfläche der Innenwandung 10 abzuführen, können überdies hier nicht dargestellte Kapillarkanäle mit einem mittleren Durchmesser von z.B. 0,1 bis 1,0 mm, vorzugsweise 0,3 mm in der Innenwandung 10 in ausreichender, beispielsweise regelmäßiger Anordnung vorgesehen sein, die sich bis in den Hohlraum 11 erstrecken und über welche Kondensat in den Hohlraum 11 abgeführt werden kann. Dadurch wird einer Zwickelbildung an der Formteiloberfläche wirksam entgegengewirkt.

Es versteht sich, dass das vorangehend erläuterte Formwerkzeug insbesondere für die Herstellung von Formteilen aus expandierbaren Kunststoffperlen geeignet ist, jedoch ist die Erfindung hierauf nicht beschränkt, sondern dieses Prinzip kann auch bei anderen geeigneten Formteilherstellungsverfahren Verwendung finden. Auch können andere Herstellungsverfahren neben dem genannten Lasersintern zur Fertigung des erfindungsgemäßen Formwerkzeuges Anwendung finden.

## Patentansprüche

1. Formwerkzeug (1) für die Herstellung von Formteilen aus expandierbaren Kunststoffperlen, wobei das Formwerkzeug (1) eine dem Formteil zugewandte Innenwandung (10) sowie eine dem Formteil abgewandte Außenwandung (12) aufweist, zwischen denen ein Hohlraum (11) für die Durchleitung eines Heiz-/Kühlmediums (K) ausgebildet ist und die Innen- und Außenwandung (10, 12) bereichsweise mittels Abstandshaltern (13) miteinander verbunden sind, und innerhalb der Abstandshalter (13) Durchgangsbohrungen (130) für die Durchleitung von Dampf ausgebildet sind, die die Innen- und Außenwandung (10, 12) durchsetzen und gegenüber- dem Hohlraum (11) abgedichtet sind, **dadurch gekennzeichnet, dass** das Formwerkzeug (1) integral einstückig aus Sintermetall hergestellt ist und die Innenwandung (10) mit einer Vielzahl von Kapillarkanälen ausgebildet ist, die sich von der dem Formteil zugewandten Innenoberfläche bis in den Hohlraum (11) erstrecken und über welche Kondensat von der dem Formteil zugewandten Innenoberfläche in den Hohlraum (11) ableitbar ist.

2. Formwerkzeug (1) nach Anspruch 1, **dadurch gekennzeichnet, dass** die Abstandshalter (13) in regelmäßigen Abständen nach Art eines Rasters zueinander angeordnet sind.

3. Formwerkzeug (1) nach Anspruch 1 oder 2, **dadurch gekennzeichnet, dass** die Abstandshalter (13) als Strömungsteiler für das durch den Hohlraum (11) durchleitbare Heiz-/Kühlmedium (K) wirken.

4. Formwerkzeug (1) nach einem der Ansprüche 1 bis 3, **dadurch gekennzeichnet, dass** die Innen- und Außenwandung (10, 12) parallel zueinander und mit konstantem Abstand voneinander angeordnet sind und die Abstandshalter (13) sich senkrecht zu der Innen- und Außenwandung (10, 12) erstrecken.

5. Formwerkzeug (1) nach einem der Ansprüche 1 bis 4, **dadurch gekennzeichnet, dass** zwischen benachbarten Abstandshaltern (13) und den dem Hohlraum (11) zugewandten Oberflächen der Innen- und Außenwandung (10, 12) jeweils kreisförmige Durchströmöffnungen (14) für das Heizkühlmedium (K) ausgebildet sind.

6. Formwerkzeug (1) nach einem der Ansprüche 1 bis 5, **dadurch gekennzeichnet, dass** sich die Durchgangsbohrungen (130) innerhalb der Abstandshalter (13) ausgehend von der Außenwandung (12) zur Innenwandung (10) hin konisch verjüngen.

7. Formwerkzeug (1) nach Anspruch 6, **dadurch gekennzeichnet, dass** sich die Durchgangsbohrungen (130) innerhalb der Abstandshalter (13) von einem Anfangsdurchmesser von 1,5 bis 2 mm auf 0,3 bis 0,5 mm konisch verjüngen.

8. Formwerkzeug (1) nach einem der Ansprüche 1 bis 7, **dadurch gekennzeichnet, dass** die Innen- und Außenwandung (10, 12) jeweils Wandstärken von 0,3 bis 3 mm aufweisen.

9. Formwerkzeug (1) nach einem der Ansprüche 1 bis 8, **dadurch gekennzeichnet, dass** der Hohlraum (11) zwischen der Außenwandung (12) und der Innenwandung (10) eine lichte Höhe von 3 bis 6 mm aufweist.

10. Formwerkzeug (1) nach einem der Ansprüche 1 bis 9, **dadurch gekennzeichnet, dass** die Abstandshalter (13) säulenartig ausgebildet sind und einen Durchmesser von 4 bis 6 mm aufweisen.

11. Formwerkzeug (1) nach einem der Ansprüche 1 bis 10, **dadurch gekennzeichnet, dass** auf der dem Hohlraum (11) abgewandten Außenseite der Außenwandung (12) einen mit den Durchgangsbohrungen (130) kommunizierende Dampfkammer (15) angeformt ist.

12. Formwerkzeug (1) nach Anspruch 11, **dadurch gekennzeichnet, dass** die Dampfkammer (15) eine lichte Höhe (HD) von 2 bis 4 mm aufweist.

13. Formwerkzeug (1) nach Anspruch 1, **dadurch gekennzeichnet, dass** die Kapillarkanäle einen Durchmesser von 0,1 bis 1,0 mm aufweisen.

## Claims

1. Moulding tool (1) for the production of moulding parts from expandable plastic beads, wherein the moulding tool (1) has an inner wall (10) facing the moulding part and an outer wall (12) facing away from the moulding part, between which a hollow space (11) is formed for the passage of a heating/cooling medium (K) and the inner and outer walls (10, 12) are connected with each other in certain areas by means of spacers (13), and through-holes (130) for the passage of steam are formed within the spacers (13) which pass through the inner and outer walls (10, 12) and are sealed with respect to the hollow space (11), **characterised in that** the moulding tool (1) is produced in one piece from sinter metal and the inner wall (10) is formed with a plurality of capillary channels which extend from the inner surfaces facing the moulding part into the hollow space (11) and by means of which condensate can be diverted from the inner surfaces facing the moulding part into the hollow space (11).

2. Moulding tool (1) according to claim 1, **characterised in that** the spacers (13) are arranged at regular intervals from each other in a grid-like manner.

3. Moulding tool (1) according to claim 1 or 2, **characterised in that** the spacers (13) work as flow distributors for the heating/cooling medium (K) passing through the hollow space (11).

4. Moulding tool (1) according to any one of claims 1 to 3, **characterised in that** the inner and outer walls (10, 12) are arranged parallel to and at a constant distance from each other, and the spacers (13) extend perpendicular to the inner and outer walls (10, 12).

5. Moulding tool (1) according to any one of claims 1 to 4, **characterised in that** respective round through-flow openings (14) for the heating/cooling medium (K) are formed between adjacent spacers (13) and the surfaces of the inner and outer walls (10, 12) facing the hollow space (11).

6. Moulding tool (1) according to any one of claims 1 to 5, **characterised in that** the through-holes (130) within the spacers (13) conically taper from the outer wall (12) to the inner wall (10).

7. Moulding tool (1) according to claim 6, **characterised in that** the through-holes (130) within the spacers (13) conically taper from an initial diameter of 1.5-2 mm to 0.3-0.5 mm.

8. Moulding tool (1) according to any one of claims 1 to 7, **characterised in that** the inner and outer walls (10, 12) each have a wall thickness of 0.3-3 mm.

9. Moulding tool (1) according to any one of claims 1 to 8, **characterised in that** the hollow space (11) between the outer wall (12) and the inner wall (10) has a clearance height of 3-6 mm.

10. Moulding tool (1) according to any one of claims 1 to 9, **characterised in that** the spacers (13) are formed in a columnar manner and have a diameter of 4-6 mm.

11. Moulding tool (1) according to any one of claims 1 to 10, **characterised in that** a steam chamber (15) communicating with the through-holes (130) is formed on the outer side of the outer wall (12) facing the hollow space (11).

12. Moulding tool (1) according to claim 11, **characterised in that** the steam chamber (15) has a clearance height (HD) of 2-4 mm.

13. Moulding tool (1) according to claim 1, **characterised in that** the capillary channels have a diameter of 0.1-1.0 mm.

## Revendications

1. Outil de formage (1) pour la fabrication de pièces moulées à partir de perles plastiques expansibles, dans lequel l'outil de formage (1) comporte une paroi intérieure (10) proche de la pièce moulée ainsi qu'une paroi extérieure (12) éloignée de la pièce moulée, parois entre lesquelles un espace creux (11) est réalisé pour la conduite d'un fluide de chauffage/refroidissement (K), et les parois intérieure et extérieure (10, 12) sont assemblées l'une à l'autre par endroits au moyen de dispositifs d'espacement (13) et des trous de passage (130) pour la conduite de vapeur sont réalisés à l'intérieur des dispositifs d'espacement (13), lesquels trous de passage traversent les parois intérieure et extérieure (10, 12) et sont étanchéifiés par rapport à l'espace creux (11), **caractérisé en ce que** l'outil de formage (1) est fabriqué intégralement d'une seule pièce à partir de métal fritté et la paroi intérieure (10) est réalisée avec une multiplicité de canaux capillaires qui s'étendent de la surface intérieure proche de la pièce moulée jusque dans l'espace creux (11) et par l'intermédiaire desquels du condensat peut être évacué de la surface intérieure proche de la pièce moulée jusque dans l'espace creux (11).

2. Outil de formage (1) selon la revendication 1, **caractérisé en ce que** les dispositifs d'espacement (13) sont agencés à intervalles réguliers les uns par rapport aux autres à la manière d'une grille.

3. Outil de formage (1) selon la revendication 1 ou 2, **caractérisé en ce que** les dispositifs d'espacement (13) agissent comme séparateurs de flux pour le fluide de chauffage/refroidissement (K) pouvant être conduit à travers l'espace creux (11).

4. Outil de formage (1) selon l'une quelconque des revendications 1 à 3, **caractérisé en ce que** les parois intérieure et extérieure (10, 12) sont agencées parallèlement l'une à l'autre et à une distance constante l'une de l'autre et les dispositifs d'espacement (13) s'étendent perpendiculairement aux parois intérieure et extérieure (10,12).

5. Outil de formage (1) selon l'une quelconque des revendications 1 à 4, **caractérisé en ce que** des ouvertures de passage (14) circulaires destinées au fluide de chauffage/refroidissement (K) sont réalisées à chaque fois entre des dispositifs d'espacement (13) voisins et les surfaces, proches de l'espace creux (11), des parois intérieure et extérieure (10, 12).

6. Outil de formage (1) selon l'une quelconque des revendications 1 à 5, **caractérisé en ce que** les trous de passage (130) à l'intérieur des dispositifs d'espacement (13) se rétrécissent de manière conique à partir de la paroi extérieure (12) en direction de la paroi intérieure (10).

7. Outil de formage (1) selon la revendication 6, **caractérisé en ce que** les trous de passage (130) à l'intérieur des dispositifs d'espacement (13) se rétrécissent de manière conique d'un diamètre initial de 1,5 à 2 mm à un diamètre de 0,3 à 0,5 mm.

8. Outil de formage (1) selon l'une quelconque des revendications 1 à 7, **caractérisé en ce que** les parois intérieure et extérieure (10, 12) présentent chacune une épaisseur de paroi de 0,3 à 3 mm.

9. Outil de formage (1) selon l'une quelconque des revendications 1 à 8, **caractérisé en ce que** l'espace creux (11) entre la paroi extérieure (12) et la paroi intérieure (10) présente une hauteur libre de 3 à 6 mm.

10. Outil de formage (1) selon l'une quelconque des revendications 1 à 9, **caractérisé en ce que** les dispositifs d'espacement (13) sont réalisés comme des colonnes et ont un diamètre de 4 à 6 mm.

11. Outil de formage (1) selon l'une quelconque des revendications 1 à 10, **caractérisé en ce qu'**une chambre de vapeur (15) communiquant avec les trous de passage (130) est formée sur le côté extérieur, éloigné de l'espace creux (11), de la paroi extérieure (12).

12. Outil de formage (1) selon la revendication 11, **caractérisé en ce que** la chambre de vapeur (15) a une hauteur libre (HD) de 2 à 4 mm.

13. Outil de formage (1) selon la revendication 1, **caractérisé en ce que** les canaux capillaires ont un diamètre de 0,1 à 1,0 mm.
